# FASCICULE DE BREVET EUROPEEN

(11) **EP 2 045 148 B1**
(45) Date de publication et mention de la délivrance du brevet: **16.12.2009**
(21) Numéro de dépôt: 08305562.4
(22) Date de dépôt: 17.09.2008
(51) Int. Cl.: B60R 22/02, B60R 22/03, B60R 22/18

(54) **Dispositif de ceinture de sécurité**
Sicherheitsgurtvorrichtung
Seatbelt device

(30) Priorité: 05.10.2007 FR 0758095
(43) Date de publication de la demande: 08.04.2009
(73) Titulaire: Renault s.a.s., 92100 Boulogne-Billancourt (FR)
(72) Inventeur: Hewak, Gregor, 95490 Vaureal (FR); Martin, Franck, 75015 Paris (FR)

(56) Documents cités:
- EP-A- 0 808 751
- DE-U1- 29 618 798
- US-B1- 7 011 375

## Description

### Domaine technique de l'invention

L'invention concerne un dispositif de ceinture de sécurité pour un siège d'un véhicule automobile, le dispositif comportant un pêne, disposé sensiblement contre une porte du véhicule dans une position de repos, une gâche, positionnée sensiblement au niveau du siège, et un organe d'aide à la préhension, associé audit pêne.

L'invention s'applique plus particulièrement à tous les types de véhicules automobiles, comportant notamment des dispositifs de ceinture de sécurité dont le bouclage est difficile.

### Etat de la technique

Dans un véhicule automobile classique, les ceintures de sécurité associées aux sièges avant du véhicule (conducteur et passager), s'avèrent souvent très difficile à saisir, notamment à cause de leur position très en arrière par rapport aux sièges. Il est alors nécessaire de tendre le bras assez loin pour récupérer le pêne de la ceinture, risquant de se faire mal, afin de l'introduire dans la gâche, ce mouvement s'avérant d'autant plus difficile pour les personnes âgées.

Pour remédier à ces inconvénients, le document WO 03/104047 propose notamment un dispositif de ceinture de sécurité muni d'un organe d'aide à la préhension sous la forme d'une pièce longitudinale à attraper, pouvant coulisser le long de la sangle de la ceinture de sécurité, afin d'attirer le pêne plus facilement.

Cependant, un tel dispositif n'est pas vraiment ergonomique, reste encore difficile d'accès et engendre également des modifications assez lourdes dans l'architecture du véhicule ou de la ceinture de sécurité en tant que telle.

Par ailleurs, une fois le pêne de la ceinture de sécurité attrapé, il est souvent nécessaire de changer l'orientation du pêne pour l'introduire dans la fente de la gâche, afin de boucler la ceinture. Cette opération peut s'avérer assez longue et difficile, si le pêne n'a pas été pris de façon adéquate dès le départ de l'opération. De même, l'environnement autour de la gâche recevant la languette du pêne, à savoir le siège, la console centrale, la position de sécurité de la gâche, peut également gêner l'opération de bouclage et entraîner une perte de temps et un véritable inconfort pour l'utilisateur de la ceinture.

### Objet de l'invention

L'invention a pour but de remédier à l'ensemble des inconvénients précités et a pour objet la réalisation d'un dispositif de ceinture de sécurité qui permette à la fois une préhension et un bouclage de la ceinture de sécurité aisés, simples et rapides.

Selon l'invention, ce but est atteint par les revendications annexées et, plus particulièrement, par le fait que le dispositif de ceinture de sécurité comporte un organe d'aide au bouclage de la ceinture coopérant avec ledit organe d'aide à la préhension.

D'autres avantages et caractéristiques de l'invention peuvent être considérées isolément ou en combinaison :
- Ledit organe d'aide au bouclage est un entonnoir, fixé contre la gâche du dispositif et servant de guidage pour ledit organe d'aide à la préhension, lors du bouclage de la ceinture de sécurité.
- L'entonnoir est creux et comporte une première portion de forme sensiblement tronconique et une seconde portion empêchant toute rotation sur lui-même de l'organe d'aide à la préhension, lors du bouclage de la ceinture de sécurité.
- L'entonnoir est creux et comporte une première portion de forme sensiblement tronconique et une seconde portion de forme sensiblement cylindrique.
- L'organe d'aide à la préhension comportant une première extrémité fixée au pêne et une seconde extrémité libre, au moins une partie de l'extrémité libre de l'organe d'aide à la préhension est métallique.
- Le véhicule à l'intérieur duquel est installé ledit dispositif de ceinture de sécurité comporte, en regard du pêne et de l'organe d'aide à la préhension associé, une zone prédéfinie aimantée, de sorte que l'organe d'aide à la préhension est orienté sensiblement à l'horizontale en position de repos.

### Description sommaire des dessins

D'autres avantages et caractéristiques ressortiront plus clairement de la description qui va suivre de modes particuliers de réalisation de l'invention donnés à titre d'exemples non limitatifs et représentés aux dessins annexés, dans lesquels :
La figure 1 représente une vue en perspective d'un mode particulier de réalisation d'un dispositif de ceinture de sécurité selon l'invention, illustrant le pêne du dispositif placé dans une première position de repos et dans une seconde position après bouclage.
Les figures 2 et 3 sont des vues de côté partielles du dispositif de ceinture de sécurité selon la figure 1, illustrant le dispositif de ceinture de sécurité dans trois positions caractéristiques.
La figure 4 est une vue partielle agrandie du dispositif de ceinture de sécurité selon les figures 1 à 3, illustrant le dispositif après bouclage de la ceinture.

### Description de modes particuliers de réalisation

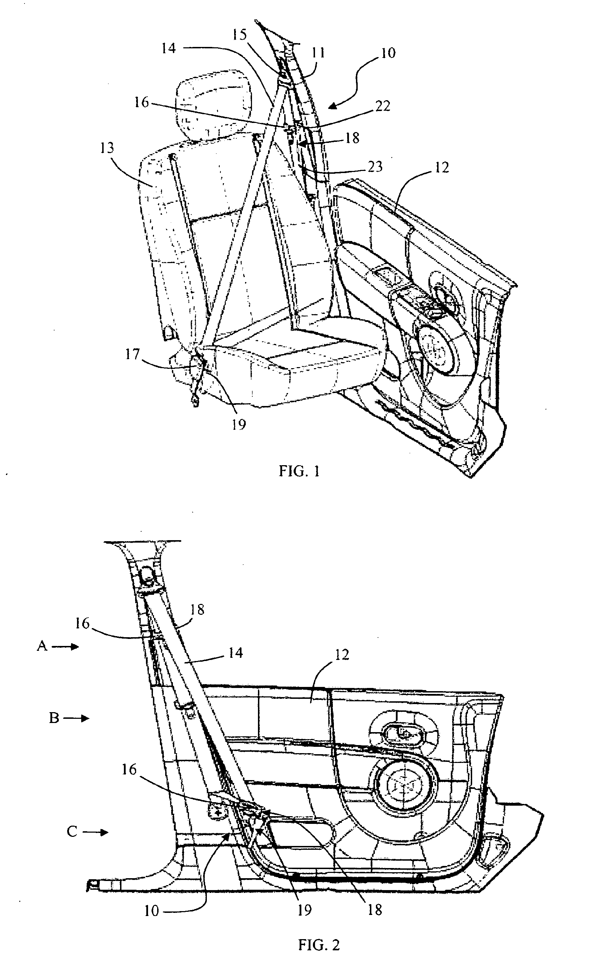

En référence aux figures 1 à 4, le dispositif 10 de ceinture de sécurité selon l'invention est installé sur un montant 11 d'une porte latérale 12 d'un véhicule automobile et associé à un siège 13 du véhicule. Sur les figures 1 et 2, le dispositif 10 est installé sur un siège 13 avant conducteur du véhicule automobile, mais celui-ci peut également être installé sur un siège avant passager, sur un siège arrière ou sur une banquette arrière du véhicule.

Sur les figures 1 à 3, le dispositif 10 de ceinture de sécurité comporte de façon classique une sangle 14 passant dans un anneau 15 fixé sur le montant 11 de la porte 12. Le dispositif 10 comporte un pêne 16, monté sur un brin de la sangle 14, du côté de la porte 12 en position de repos (figure 1). Le pêne 16 comporte une languette destinée à venir s'insérer dans une fente associée d'une gâche 17, fixée sur le côté du siège 13 associé (figure 1). Sur la figure 1, le pêne 16 est représenté à la fois en position de repos contre le montant 11 de la porte 12 et en position de bouclage de la ceinture dans la gâche 17, de manière à illustrer deux positions caractéristiques du dispositif 10 de ceinture de sécurité selon l'invention.

Dans l'exemple de réalisation représenté sur les figures 1 à 4, le dispositif 10 comporte une tige 18, de forme sensiblement cylindrique, fixée au pêne 16 du dispositif 10, par l'intermédiaire, par exemple, d'un système de montage en pince (non représenté sur les figures 1 à 4 pour des raisons de clarté). Le dispositif 10 comporte également un entonnoir 19, fixé contre la gâche 17 et destiné à coopérer avec la tige 18 cylindrique.

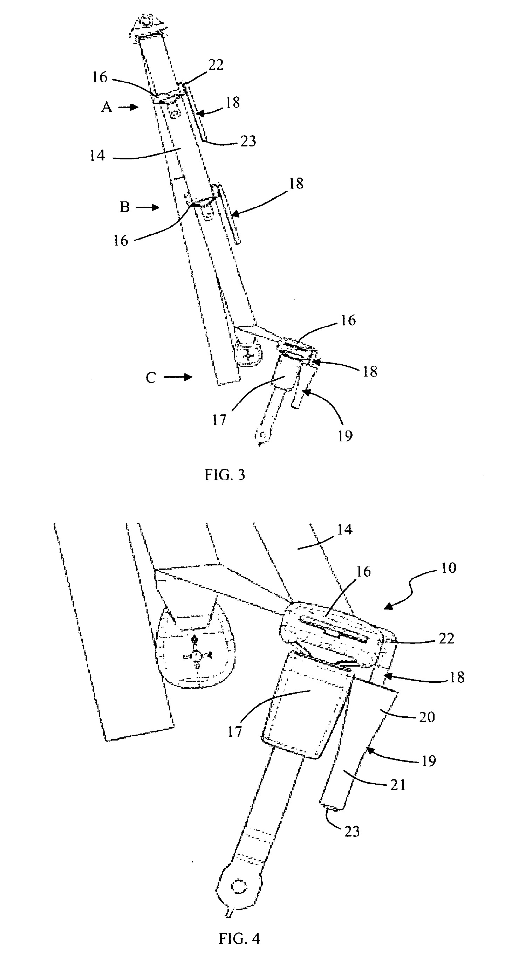

Lors de l'opération de bouclage de la ceinture de sécurité, la tige 18 sert notamment d'organe d'aide à la préhension du pêne 16 et l'entonnoir 19 sert notamment d'organe d'aide au bouclage, en guidant la tige 18 du dispositif 10, lors de l'insertion du pêne 16 dans la gâche 17. Comme représenté plus en détails sur les figures 2 et 3, illustrant uniquement la porte latérale 12 (figure 2) et le dispositif de ceinture de sécurité 10 selon l'invention (figures 2 et 3), l'opération de bouclage de la ceinture de sécurité consiste à saisir le tige 18, placée en position haute dans la première position de repos (position A) et à faire glisser le pêne 16 le long du brin de la sangle 14. Le pêne 16 coulisse alors le long de la sangle 14 de la ceinture (position B) et la tige 18 est ensuite introduite dans l'entonnoir 19 (position C), la tige 18 étant guidée par l'entonnoir 19, de sorte que la languette du pêne 16 est guidée dans la fente correspondante de la gâche 17 (figures 3 et 4).

Comme représenté sur la figure 4, illustrant plus en détails l'entonnoir 19 et la tige 18 en position de bouclage de la ceinture, l'entonnoir 19 est creux et comporte une première portion 20 de forme tronconique, facilitant l'introduction de la tige 18, et une seconde portion 21 de forme cylindrique, recevant une partie de la tige 18 également cylindrique. Les dimensions de l'entonnoir 19 sont donc telles qu'elles permettent de guider le pêne 16 vers la fente associée de la gâche 17 de façon simple et rapide.

Dans d'autres variantes de réalisation non représentées, la forme de la tige 18 et de la seconde portion 21 de l'entonnoir 19 peuvent être telles qu'elles empêchent la rotation de la tige 18 sur elle-même dans l'entonnoir 19, lors de l'opération de bouclage de la ceinture. A titre d'exemple, la tige 18 peut être de section carrée, rectangulaire ou ellipsoïdale. Au moins la seconde portion 21 de l'entonnoir 19 est alors de forme complémentaire à la section correspondante de la tige 18.

Quel que soit le mode de réalisation du dispositif 10 de ceinture de sécurité comme décrit ci-dessus, avec une tige 18 et un entonnoir 19 associé, celui-ci offre donc un système à la fois d'aide à la préhension et d'aide au bouclage de la ceinture qui soit simple, rapide et qui ne modifie pas ou peu l'architecture actuelle des véhicules.

Par ailleurs, la tige 18 du dispositif 10 de ceinture de sécurité comporte une première extrémité 22 (figures 1 et 4) fixée au pêne 16 et une seconde extrémité 23 libre, destinée à s'insérer dans l'entonnoir 19, comme représenté sur la figure 4 et décrit ci-dessus. De façon avantageuse, au moins une partie de la tige 18 est métallique, afin de coopérer avec une zone prédéfinie aimantée associée du véhicule. A titre d'exemple, au moins l'extrémité libre 23 de la tige 18 est métallique. De façon générale, l'ensemble de la tige 18 peut être métallique, tant qu'elle n'interfère pas sur les mouvements du pêne 16.

Comme représenté sur les figures 1 à 4, la tige cylindrique 18 s'étend le long du pêne 16 et de la sangle 14 de ceinture, en position de repos. Dans une variante de réalisation non représentée, le véhicule à l'intérieur duquel est installé le dispositif 10 de ceinture de sécurité selon l'invention peut comporter une zone prédéfinie aimantée, destinée à coopérer avec la tige 18 avantageusement métallique, comme décrit ci-dessus. Une telle zone aimantée permet alors à la tige 18 de s'orienter sensiblement à l'horizontale en position de repos contre le montant 11 de la porte 12, lorsque la porte 12 est fermée. Lors de l'ouverture de la porte 12, la tige 18 retombe sensiblement à la verticale, afin de ne pas gêner l'accès au siège 13. A titre d'exemple, une partie du montant 11 de la porte 12 du véhicule ou une partie du siège 13 du véhicule, à savoir en regard du pêne 16 et de la tige 18 en position de repos, peut être aimantée.

Un tel dispositif 10 de ceinture de sécurité comme décrit ci-dessus, permet ainsi à la fois une aide à la préhension et au bouclage, mais également une aide supplémentaire à la préhension de la tige 18, avec la zone prédéfinie aimantée, participant à l'amélioration de l'opération de bouclage de la ceinture de sécurité.

L'invention n'est pas limitée aux différents modes de réalisation décrits ci-dessus. La forme et les dimensions de la tige 18 et de l'entonnoir 19 sont non limitatives et dépendent notamment de la taille souhaitée du dispositif 10 de ceinture de sécurité, tant que la tige 18 constitue un organe d'aide à la préhension et l'entonnoir 19 un organe d'aide au bouclage.

Dans une variante de réalisation non représentée, le dispositif 10 de ceinture de sécurité peut comporter un système de pivotement de la tige 18 en position de repos et en position d'utilisation.

Dans une autre variante de réalisation non représentée, une masse peut être fixée sur l'arrière du pêne 16, afin de faire contrepoids. La masse permet alors au pêne 16, plus particulièrement à la tige 18, de se retrouver à l'horizontale, la rotation se faisant autour de l'arrête de pêne 16 standard du dispositif de ceinture de sécurité et la masse devant être suffisante pour déformer la ceinture.

## Revendications

1. Dispositif (10) de ceinture de sécurité pour un siège (13) d'un véhicule automobile, le dispositif (10) comportant un pêne (16), disposé sensiblement contre une porte (12) du véhicule dans une position de repos, une gâche (17), positionnée sensiblement au niveau du siège (13), et un organe d'aide à la préhension, associé audit pêne (16), dispositif **caractérisé en ce qu'**il comporte un organe d'aide au bouclage de la ceinture coopérant avec ledit organe d'aide à la préhension.

2. Dispositif selon la revendication 1, **caractérisé en ce que** ledit organe d'aide au bouclage est un entonnoir (19), fixé contre la gâche (17) du dispositif (10) et servant de guidage pour ledit organe d'aide à la préhension, lors du bouclage de la ceinture de sécurité.

3. Dispositif selon la revendication 2, **caractérisé en ce que** l'entonnoir (19) est creux et comporte une première portion (20) de forme sensiblement tronconique et une seconde portion (21) empêchant toute rotation sur lui-même de l'organe d'aide à la préhension, lors du bouclage de la ceinture de sécurité.

4. Dispositif selon la revendication 3, **caractérisé en ce que** l'organe d'aide à la préhension est une tige (18) de section carrée, rectangulaire ou ellipsoïdale, solidaire du pêne (16) du dispositif (10), la seconde portion (21) de l'entonnoir (19) étant de forme complémentaire à la tige (18).

5. Dispositif selon la revendication 2, **caractérisé en ce que** l'entonnoir (19) est creux et comporte une première portion (20) de forme sensiblement tronconique et une seconde portion (21) de forme sensiblement cylindrique.

6. Dispositif selon la revendication 5, **caractérisé en ce que** ledit organe d'aide à la préhension est une tige (18) de forme sensiblement cylindrique, solidaire du pêne (16) du dispositif (10).

7. Dispositif selon l'une quelconque des revendications 1 à 6, **caractérisé en ce que,** l'organe d'aide à la préhension comportant une première extrémité (22) fixée au pêne (16) et une seconde extrémité (23) libre, au moins une partie de l'extrémité libre (23) de l'organe d'aide à la préhension est métallique.

8. Dispositif la revendication 7, **caractérisé en ce que** le véhicule à l'intérieur duquel est installé ledit dispositif (10) de ceinture de sécurité comporte, en regard du pêne (16) et de l'organe d'aide à la préhension associé, une zone prédéfinie aimantée, de sorte que l'organe d'aide à la préhension est orienté sensiblement à l'horizontale en position de repos.

9. Dispositif selon la revendication 8, **caractérisé en ce que** ladite zone prédéfinie aimantée est une partie d'un montant (11) de la porte (12) du véhicule associé au dispositif (10).

10. Dispositif selon la revendication 8, **caractérisé en ce que** ladite zone prédéfinie aimantée est une partie du siège (13) du véhicule associé au dispositif (10).

## Claims

1. Seat belt device (10) for a motor vehicle seat (13), the device (10) comprising a latch plate (16) arranged approximately against a door (12) of the vehicle in a rest position, a buckle (17) positioned approximately level with the seat (13), and a grab aid connected to said latch plate (16), **the device being characterized in that** it comprises a belt latching aid working in conjunction with said grab aid.

2. Device according to Claim 1, **characterized in that** said latching aid is a funnel (19) fixed to the buckle (17) of the device (10) and acting as a guide for said grab aid during latching of the seat belt.

3. Device according to Claim 2, **characterized in that** the funnel (19) is hollow and comprises a first portion (20) of generally frustoconical shape and a second portion (21) preventing any rotation of the grab aid about itself during latching of the seat belt.

4. Device according to Claim 3, **characterized in that** the grab aid is a rod (18) of square, rectangular or elliptical cross section fixed to the latch plate (16) of the device (10), and the shape of the second portion (21) of the funnel (19) is complementary to that of the rod (18).

5. Device according to Claim 2, **characterized in that** the funnel (19) is hollow and comprises a first portion (20) of generally frustoconical shape and a second portion (21) of generally cylindrical shape.

6. Device according to Claim 5, **characterized in that** said grab aid is a rod (18) of generally cylindrical shape fixed to the latch plate (16) of the device (10).

7. Device according to any one of Claims 1 to 6, **characterized in that**, when the grab aid has a first end (22) fixed to the latch plate (16) and an unattached second end (23), at least part of the unattached end (23) of the grab aid is metal.

8. Device according to Claim 7, **characterized in that** the vehicle in which said seat belt device (10) is fitted comprises, adjacent to the latch plate (16) and associated grab aid, a predefined magnetized area so that the grab aid is oriented approximately horizontally in the rest position.

9. Device according to Claim 8, **characterized in that** said predefined magnetized area is part of a pillar (11) of the door (12) of the vehicle fitted with the device (10).

10. Device according to Claim 8, **characterized in that** said predefined magnetized area is part of the seat (13) of the vehicle fitted with the device (10).

## Patentansprüche

1. Sicherheitsgurtvorrichtung (10) für einen Sitz (13) eines Kraftfahrzeugs, wobei die Vorrichtung (10) eine Steckzunge (16), die im Wesentlichen an einer Tür (12) des Fahrzeugs in einer Ruheposition angeordnet ist, eine Schließöse (17), die im Wesentlichen auf der Höhe des Sitzes (13) positioniert ist, und ein der Steckzunge (16) zugeordnetes Element zur Unterstützung des Ergreifens umfasst, **dadurch gekennzeichnet, dass** die Vorrichtung ein Element zur Unterstützung des Anschnallens des Gurts umfasst, das mit dem Element zur Unterstützung des Ergreifens zusammenwirkt.

2. Vorrichtung nach Anspruch 1, **dadurch gekennzeichnet, dass** es sich bei dem Element zur Unterstützung des Anschnallens um einen Trichter (19) handelt, der an der Schließöse (17) der Vorrichtung (10) befestigt ist und beim Anschnallen des Sicherheitsgurts als Führung für das Element zur Unterstützung des Ergreifens dient.

3. Vorrichtung nach Anspruch 2, **dadurch gekennzeichnet, dass** der Trichter (19) hohl ist und einen ersten im Wesentlichen kegelstumpfförmigen Abschnitt (20) und einen zweiten Abschnitt (21) umfasst, der beim Anschnallen des Sicherheitsgurts jede Drehung des Elements zur Unterstützung des Ergreifens um sich selbst verhindert.

4. Vorrichtung nach Anspruch 3, **dadurch gekennzeichnet, dass** es sich bei dem Element zur Unterstützung des Ergreifens um eine Stange (18) mit quadratischem, rechteckigem oder ellipsoidischem Querschnitt handelt, die fest mit der Steckzunge (16) der Vorrichtung (10) verbunden ist, wobei der zweite Abschnitt (21) des Trichters (19) eine zur Stange (18) komplementäre Form hat.

5. Vorrichtung nach Anspruch 2, **dadurch gekennzeichnet, dass** der Trichter (19) hohl ist und einen ersten im Wesentlichen kegelstumpfförmigen Abschnitt (20) und einen zweiten im Wesentlichen zylindrischen Abschnitt (21) umfasst.

6. Vorrichtung nach Anspruch 5, **dadurch gekennzeichnet, dass** es sich bei dem Element zur Unterstützung des Ergreifens um eine im Wesentlichen zylindrische Stange (18) handelt, die fest mit der Steckzunge (16) der Vorrichtung (10) verbunden ist.

7. Vorrichtung nach einem der Ansprüche 1 bis 6, **dadurch gekennzeichnet, dass** das Element zur Unterstützung des Ergreifens ein erstes Ende (22), das an der Steckzunge (16) befestigt ist, und ein zweites freies Ende (23) umfasst, wobei mindestens ein Teil des freien Endes (23) des Elements zur Unterstützung des Ergreifens metallisch ist.

8. Vorrichtung nach Anspruch 7, **dadurch gekennzeichnet, dass** das Fahrzeug, in dessen Innerem die Sicherheitsgurtvorrichtung (10) eingebaut ist, gegenüber der Steckzunge (16) und dem zugeordneten Element zur Unterstützung des Ergreifens einen vordefinierten magnetisierten Bereich umfasst, so dass das Element zur Unterstützung des Ergreifens in der Ruheposition im Wesentlichen horizontal ausgerichtet ist.

9. Vorrichtung nach Anspruch 8, **dadurch gekennzeichnet, dass** der vordefinierte magnetisierte Bereich ein Teil einer Säule (11) der Tür (12) des mit der Vorrichtung (10) ausgerüsteten Fahrzeugs ist.

10. Vorrichtung nach Anspruch 8, **dadurch gekennzeichnet, dass** der vordefinierte magnetisierte Bereich ein Teil des Sitzes (13) des mit der Vorrichtung (10) ausgerüsteten Fahrzeugs ist.
